# EUROPEAN PATENT SPECIFICATION

(11) **EP 0 781 677 B1**
(45) Date of publication and mention of the grant of the patent: **06.06.2001**
(21) Application number: 96120538.2
(22) Date of filing: 19.12.1996
(51) Int. Cl.: B60K 15/035

(54) **Vent valve for vehicle fuel tank**
Tankentlüftungsventil für den Kraftstoffbehälter eines Fahrzeuges
Soupape de purge pour un réservoir de carburant d'un véhicule

(30) Priority: 27.12.1995 KR 9559727
(43) Date of publication of application: 02.07.1997
(73) Proprietor: Hyundai Motor Company, Seoul (KR)
(72) Inventor: Sung, Yeoun Kwan, Namyang-Myun, Hwasung-Kun, Kyungki-Do (KR)
(74) Representative: TER MEER STEINMEISTER & PARTNER GbR

(56) References cited:
- EP-A- 0 648 637
- US-A- 4 887 578
- US-A- 5 014 742
- US-A- 5 215 132

## Description

### BACKGROUND OF THE INVENTION

### 1. Field of the Invention

The present invention relates to a vent valve of a fuel tank for vehicle, and in particular to an improved vent valve of a fuel tank for vehicle which is capable of discharging the vaporized fuel gas into a canister while fuel is supplied into the fuel tank, so that the fuel gas is not discharged outside through a fuel injection pipe.

### 2. Description of the Conventional Art

Generally, in a fuel tank of a vehicle, vaporization of liquid fuel is activated, for example, by an increase in temperature, and accordingly, an internal pressure of the tank is increased. In the above-described state, if a vehicle accident occurs, the fuel vapor of high pressure may cause an explosion or a fire.

Also, when the pressure in the fuel tank is thusly increased, it is difficult to supply the fuel into the fuel tank due to the reverse flow of fuel and furthermore, fuel vapor may be discharged outside through the fuel injection pipe, which is dangerous and hazardous.

In order to overcome the above-described problems, a technique was disclosed in U.S. Patent 5,313,978 entitled "Ventilation line opening/closing means of fuel tank", which includes a float valve arranged in a ventilation line for introducing gas of fuel tank into a canister in order to control ventilation, a spring provided for closing a vent shut-off valve during a stop of an engine, and a fuel receiving portion having escape holes in the bottom portion, for thus opening the vent shut-off valve and withstanding the force of the spring.

However, the above-described technique has disadvantages in that the construction of the ventilation line opening/closing means for fuel tank is too complicated, for thus increasing the fabrication cost, and degrading the reliability of the system.

EP 0 648 637 A1 discloses a vapor recovery system for a fuel tank of a vehicle wherein a fuel injection pipe is connected to a portion of the fuel tank and a canister is connected to the fuel tank via a vent valve.

This known vent valve comprises a guide pipe disposed in an upper portion of the fuel tank and having a cap threaded on to the lower end of the guide pipe and being provided with a plurality of introducing holes formed along the circumference therof. A valve housing is arranged at the upper most portion of the guide pipe and connected thereto via a vapor vent conduit. The interior of the valve housing is communicating via a discharge path with the canister. A cap is disposed on the top of the valve housing. A valve body disposed in the valve housing is connected to the cap by a diaphragm which closes a chamber between the cap and the valve body, and an elastic member placed between the cap and the valve body. The interior of the chamber between the cap and the valve body is communicating via a negative pressure path with the fuel injection pipe. At least, a means for preventing liquid fuel from being discharged into the canister is disposed below a lower passage of the guide pipe.

### SUMMARY OF THE INVENTION

Accordingly it is an object of the present invention to provide in an improved vent valve of a fuel tank of a vehicle which overcomes the problems encountered in the conventional art.

It is another object of the present invention to provide an improved vent valve of a fuel tank for vehicle which is capable of opening the vent valve during fuel supply, and blocking the same when avehicle rolls over, whereby it is possible to prevent the fuel from being discharged outside.

The above objects are achieved by the improved vent valve according to claim 1.

Additional advantages, objects and other features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The present invention will become more fully understood from the detailed description given hereinbelow and the accompanying drawings which are given by way of illustration only, and thus are not limitative of the present invention, wherein:
Figure 1 is a cross-sectional view illustrating the construction of a fuel tank which includes a vent valve according to the present invention;
Figure 2 is a cross-sectional view illustrating the construction of a vent valve of a fuel tank according to the present invention;
Figure 3 is a cross-sectional view illustrating an operational state of the present invention when the vent valve is discharging the fuel vapor;
Figure 4 is a cross-sectional view illustrating an operational state of the present invention when the vehicle is overturned; and
Figure 5 is a cross-sectional view illustrating another embodiment of the present invention.

### DETAILED DESCRIPTION OF THE INVENTION

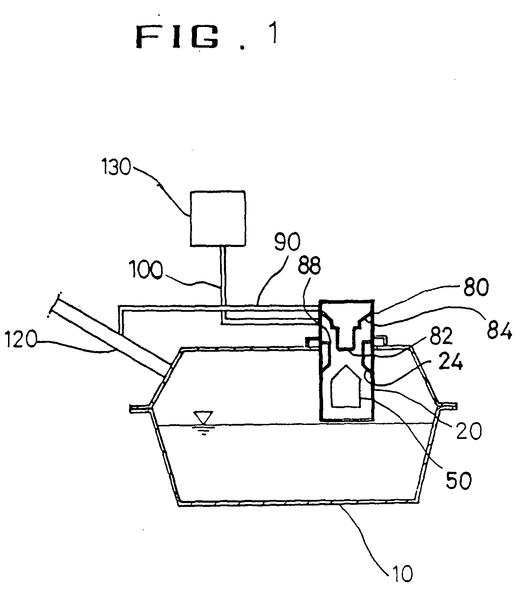

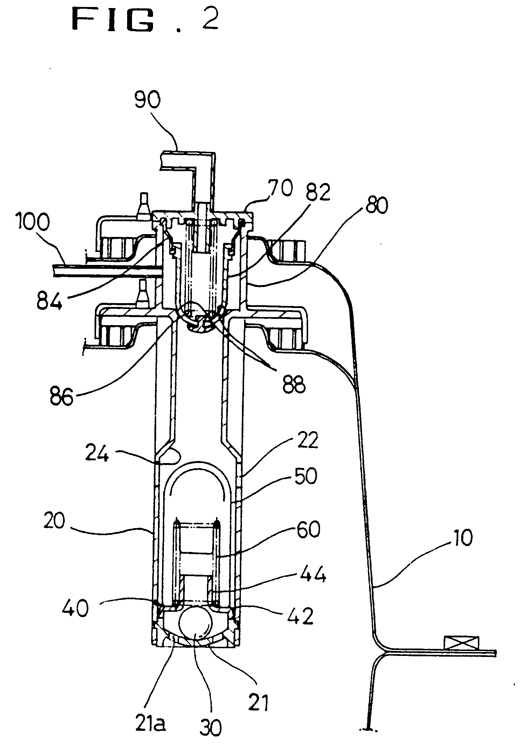

Figure 1 is a cross-sectional view illustrating the construction of a fuel tank which includes a vent valve according to the present invention, and Figure 2 is a cross-sectional view illustrating the construction of a vent valve of a fuel tank according to the present invention.

As shown therein, a guide pipe 20 is disposed in an upper portion of a fuel tank 10, and a base member 21 which has a plurality of through holes 21a formed therein is fixed in the lowermost position of the guide pipe 20.

A guide flange 40 is disposed on the base member 21 inside the guide pipe 20 such that the guide flange 40 can slide up and down inside the guide pipe 20. Said guide flange 40 comprises a cylindrical body 42 which has predetermined height and outer diameter so as to facilitate stable up and down movement of the guide flange 40, and a boss 44 formed thereon, which has a diameter smaller than a steel ball 30 which is received between the base member 21 and the guide flange 40. On the guide flange 40, a float 50 is connected by an elastic member 60 for the float 50 such that the float 50 receives an upward force from the elastic member 60 for the float 50.

A plurality of introducing holes 22 are formed along the circuferential surface of the guide pipe 20 so as to introduce the fuel vapor into the guide pipe 20. A lower passage 24 of the guide pipe 20 is formed to be opened and closed by the float 50, in the intermediate portion of the guide pipe 20.

A valve housing 80 is defined onto the uppermost portion of the guide pipe 20, and a cap 70 is fixed on top of the valve housing 80. Inside the valve housing 80, a valve body 82 is connected to the inner surface of the cap 70 by a diaphragm 84. An elastic member 86 for the valve body 82 is inserted between the cap 70 and the valve body 82 such that the valve body 82 receives a downward force from the elastic member 86. The valve body 82 opens and closes an upper passage 88 of the guide pipe 20, which passage is formed right under the valve housing 80.

The interior of the valve housing 80 communicates with a canister 130 by a discarge path 100, and the interior of the valve body 82 and the diaphragm 84 communicates with a fuel injection pipe 120 by a negative pressure path 90.

The operation of the vent valve according to the present invention will now be explained.

In a normal condition, the valve body 82 closes the upper passage 88 of the guide pipe 20 as shown in Figure 2, thereby blocking the discharge of the fuel vapor.

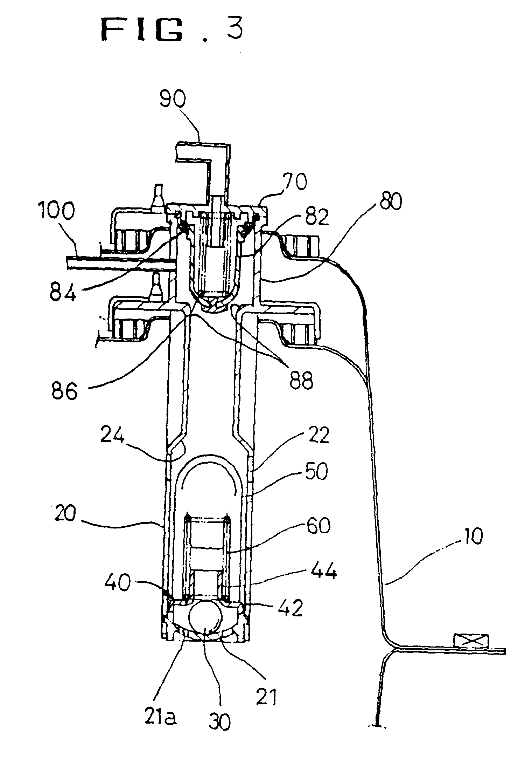

When the pressure of the fuel vapor is high enough to overcome the elastic force of the elastic member 86 in the valve body 82, the upper passage 88 of the guide pipe 20 is opened as shown in Figure 3, and the fuel vapor introduced into the guide pipe 20 through the introducing holes 22 is discharged into the canister 130 through the valve housing 80 and the discharge path 100.

Particularly, when the fuel is being supplied, the pressure in the fuel injection pipe 120 is decreased due to the fast flow of the fuel therein, and the pressure inside the valve body 82 and the diaphragm 84 is also decreased. At this moment, since the pressure in the fuel tank 10 is relatively higher, the valve body 82 is lifted by the pressure difference as shown in Figure 3 and the fuel vapor is discharged into the canister 130. Therefore, the discharge of the fuel vapor through the fuel injection pipe 120 is prevented and the fuel supply becomes safer and easier.

While the discharge of the fuel vapor is thusly permitted, the discharge of the liquid fuel is prevented by the operation of the float 50. Namely, when the level of the fuel rises due to a leaning of a vehicle, the float 50 is lifted by both the buoyancy and the elastic force of the elastic member 60 for the float 50, thereby blocking the lower passage 24 of the guide pipe 20. The liquid fuel introduced into the guide pipe 20 drains through the through holes 21a afterwards.

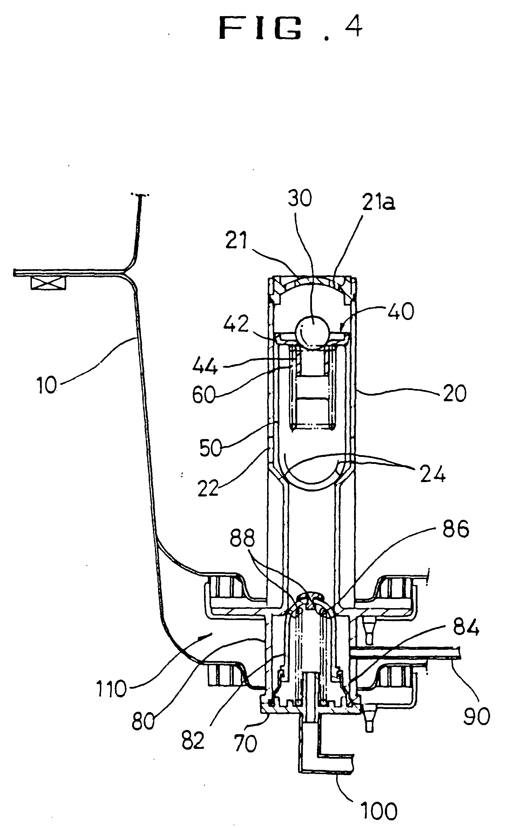

Even when a vehicle is overturned, the steel ball 30 and the guide flange 40 move downward and consequently the float 50 blocks the lower passage 24 as shown in Figure 4. Therefore, the leakage of the fuel, which could possibly cause an explosion or a fire, is prevented.

As described above, the vent valve of a fuel tank according to the present invention is basically directed to open the vent valve during fuel supply, and blocking the same when a vehicle accident occurs in order to prevent fuel leakage.

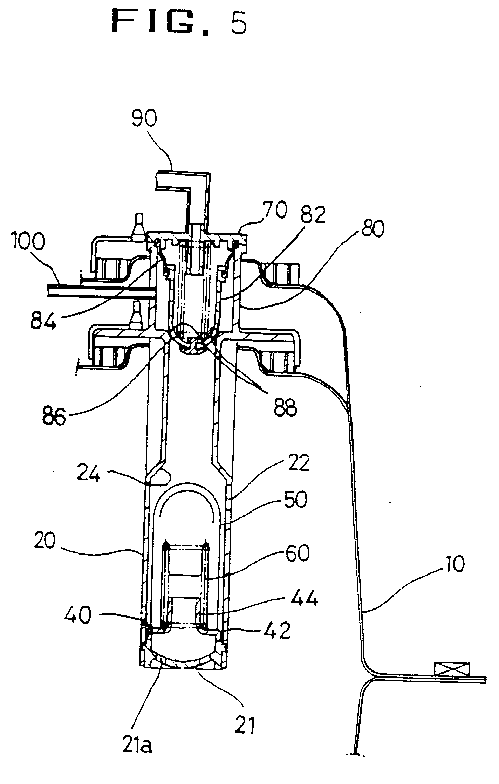

In the above described embodiment, the steel ball 30 is received between the base member 21 and the guide flange 40 so as to apply its weight to the guide flange 40 when the vehicle is overturned, thereby causing the float 50 to block the lower passage 24. However, in another embodiment as shown in Figure 5, a steel ball may not be used. Instead, the guide flange 40 should have a weight enough to cause the float 50 to block the lower passage 24 when the vehicle is overturned.

Although the preferred embodiments of the present invention have been disclosed for illustrative purposes, those skilled in the art will appreciate that various modifications, additions and substitutions are possible, without departing from the scope of the invention as recited in the accompanying claims.

## Claims

1. A vent valve of a fuel tank for vehicle wherein a fuel injection pipe (120) is connected to a portion of the fuel tank (10), and a canister (130) is connected to the vent valve, comprising:
- a guide pipe (20) disposed in an upper portion of the fuel tank (10), with a plurality of introducing holes formed along the lower circumference thereof;
- a valve housing (80) defined onto the upper most portion of said guide pipe (20), the interior thereof communicating via discharge path (100) with the canister (130);
- a cap (70) disposed on top of that valve housing (80);
- a valve body (82) disposed in that valve housing, connected to that cap (70) by diaphragm (84), which closes a chamber between the cap and the valve body, and an elastic member (86) placed between the cap and the valve body (82), the interior of said chamber ofthe valve body communicating via the negative pressure path (90) with the fuel injection pipe (120); and
- a means disposed below a lower passage (24) of said guide pipe for preventing liquid fuel from being discharged into the canister (130); wherein
- an upper passage (88) of the guide pipe (20) which is connected to a lower opening of said valve housing (80), acts as a valve seat for the valve body (82) and
- upper passage (88) is opened and closed by said valve body (82).

2. The vent valve of claim 1, charcaterized in that said means for preventing liquid fuel from being discharged into the canister (130) comprises:
a base member (21) fixed in the lowermost position of the guide pipe (20) with a plurality of through holes (21a) formed therein;
a guide flange (40) disposed on said base member (21) such that the guide flange (40) can slide up and down inside said guide pipe (20);
a steel ball (30) received between said base member (21) and said guide flange (40) so as to apply weight to said guide flange (40) when the vehicle is overturned;
a float (50) disposed on said guide flange (40) and supported by an elastic member (60) for the float (50) so as to move up and down inside said guide pipe (20) by buoyancy and elastic force of said elastic member (60) for the float (50);
a lower passage (24) defined in an intermediate portion of the guide pipe (20), and opened and closed by said float (50).

3. The vent valve of claim 2, characterized in that said guide flange (40) comprises:
a cylindrical body (42) which has predetermined height and outer diameter so as to facilitate stable up and down movement of the guide flange (40), and
a boss (44) formed on said cylindrical body (42), which has a diameter smaller than the steel ball (30).

4. The vent valve of claim 1, characterized in that said means for preventing liquid fuel from being discharged into the canister (130) comprises:
a base member (21) fixed in the lowermost position of the guide pipe (20), with a plurality of through holes (21a) formed therein;
a float (50) inserted in a lower portion of the guide pipe (20) and supported by an elastic member (60) for the float (50) so as to move up and down by buoyancy and elastic force of the elastic member (60) for the float (50);
a guide flange (40) slidingly disposed between said base member (21) and said float (50) so as to move said float (50) downward when the vehicle is overturned; and
a lower passage (24) defined in an intermediate portion of the guide pipe (20), and opened and closed by said float (50).

5. The vent valve of claim 4, characterized in that said guide flange 40 comprises:
a cylindrical body (42) which has predetermined height and outer diameter so as to facilitate stable up and down movement of the guide flange (40), and
a boss (44) formed on said cylindrical body (42) which has a diameter smaller than the diameter of said cylindrical body (42).

6. The vent valve of claims 2 or 4, characterized in that said lower passage (24) is formed such that the inner diameter thereof is smaller in the upper portion thereof and bigger in the lower portion thereof.

## Patentansprüche

1. Belüftungsventil für einen Fahrzeug-Kraftstofftank, wobei ein Kraftstoffeinleitungsrohr (120) mit einem Abschnitt des Kraftstofftanks (10) verbunden ist und mit dem Belüftungsventil ein Filterbehälter (130) verbunden ist, mit:
- einem Führungsrohr (20), das in einem oberen Abschnitt des Kraftstofftanks (10) angeordnet ist und mehrere Einleitungslöcher besitzt, die längs seiner unteren Umfangsfläche ausgebildet sind;
- einem Ventilgehäuse (80), das auf dem obersten Abschnitt des Führungsrohrs (20) definiert ist und dessen Innenraum über einen Entleerungsweg (100) mit dem Filterbehälter (130) in Verbindung steht;
- einer Kappe (70), die an der Oberseite des Ventilgehäuses (80) angeordnet ist;
- einem Ventilkörper (82), der in jenem Ventilgehäuse angeordnet ist und mit der Kappe (70) durch eine Membran (84), die eine Kammer zwischen der Kappe und dem Ventilkörper verschließt, und ein elastisches Element (86), das zwischen der Kappe und dem Ventilkörper (82) angeordnet ist, verbunden ist, wobei der Innenraum der Kammer des Ventilkörpers über den Unterdruckweg (90) mit dem Kraftstoffeinleitungsrohr (120) in Verbindung steht; und
- einer Einrichtung, die unter einem unteren Durchlaß (24) des Führungsrohrs angeordnet ist, um eine Entleerung flüssigen Kraftstoffs in den Filterbehälter (130) zu verhindern; wobei
- ein oberer Durchlaß (88) des Führungsrohrs (20), der mit einer unteren Öffnung des Ventilgehäuses (80) verbunden ist, als ein Ventilsitz für den Ventilkörper (82) wirkt und
- der obere Durchlaß (88) durch den Ventilkörper (82) geöffnet und geschlossen wird.

2. Entlüftungsventil nach Anspruch 1, dadurch gekennzeichnet, daß die Einrichtung zum Verhindern einer Entleerung flüssigen Kraftstoffs in den Filterbehälter (130) umfaßt:
ein Basiselement (21), das an der untersten Position des Führungsrohrs (20) befestigt ist und in dem mehrere Durchgangslöcher (21a) ausgebildet sind;
einen Führungsflansch (40), der am Basiselement (21) in der Weise angeordnet ist, daß er in dem Führungsflansch (20) aufwärts und abwärts gleiten kann;
eine Stahlkugel (30), die zwischen dem Basiselement (21) und dem Führungsflansch (40) aufgenommen ist, um auf den Führungsflansch (40) ein Gewicht auszuüben, wenn sich das Fahrzeug überschlägt;
einen Schwimmer (50), der auf dem Führungsflansch (40) angeordnet ist und durch ein elastisches Element (60) für den Schwimmer (50) gehalten wird, um sich in dem Führungsrohr (20) durch den Auftrieb und durch die elastische Kraft des elastischen Elements (60) für den Schwimmer (50) aufwärts und abwärts zu bewegen;
einen unteren Durchlaß (24), der in einem Zwischenabschnitt des Führungsrohrs (20) definiert ist und durch den Schwimmer (50) geöffnet und geschlossen wird.

3. Belüftungsventil nach Anspruch 2, dadurch gekennzeichnet, daß der Führungsflansch (40) umfaßt:
einen zylindrischen Körper (42), der eine vorgegebene Höhe und einen vorgegebenen Außendurchmesser besitzt, um eine stabile Aufwärts- und Abwärtsbewegung des Führungsflansches (40) zu erleichtern, und
eine Nabe (44), die am zylindrischen Körper (42) ausgebildet ist und einen Durchmesser besitzt, der kleiner als die Stahlkugel (30) ist.

4. Belüftungsventil nach Anspruch 1, dadurch gekennzeichnet, daß die Einrichtung zum Verhindern einer Entleerung flüssigen Kraftstoffs in den Filterbehälter (130) umfaßt:
ein Basiselement (21), das an der untersten Position des Führungsrohrs (20) befestigt ist und in dem mehrere Durchgangslöcher (21a) ausgebildet sind;
einen Schwimmer (50), der in einen unteren Abschnitt des Führungsrohrs (20) eingesetzt ist und durch ein elastisches Element (60) für den Schwimmer (50) gehalten wird, so daß er sich durch den Auftrieb und die elastische Kraft des elastischen Elements (60) für den Schwimmer (50) aufwärts und abwärts bewegt;
einen Führungsflansch (40), der zwischen dem Basiselement (21) und dem Schwimmer (50) gleitend angeordnet ist, so daß der Schwimmer (50) nach unten bewegt wird, wenn sich das Fahrzeug überschlägt; und
einen unteren Durchlaß (24), der in einem Zwischenabschnitt des Führungsrohrs (20) definiert ist und durch den Schwimmer (50) geöffnet und geschlossen wird.

5. Belüftungsventil nach Anspruch 4, dadurch gekennzeichnet, daß der Führungsflansch (40) umfaßt:
einen zylindrischen Körper (42), der eine vorgegebene Höhe und einen vorgegebenen Außendurchmesser besitzt, um eine stabile Aufwärts- und Abwärtsbewegung des Führungsflansches (40) zu erleichtern, und
eine Nabe (44), die am zylindrischen Körper (42) ausgebildet ist und einen Durchmesser besitzt, der kleiner als der Durchmesser des zylindrischen Körpers (42) ist.

6. Belüftungsventil nach Anspruch 2 oder 4, dadurch gekennzeichnet, daß der untere Durchlaß (24) so ausgebildet ist, daß sein Innendurchmesser in seinem oberen Abschnitt kleiner und in seinem unteren Abschnitt größer ist.

## Revendications

1. Une valve de ventilation d'un réservoir de carburant pour véhicule, dans laquelle un tube d'introduction de carburant (120) est relié à une partie du réservoir de carburant (10), et un récipient fermé (130) est relié à la valve de ventilation, comprenant :
- un tube de guidage (20) disposé dans une partie supérieure du réservoir de carburant (10), avec une pluralité de trous d'introduction formés le long de la circonférence inférieure du tube ;
- un corps de valve (80) défini sur la partie la plus haute dudit tube de guidage (20), l'intérieur du corps communiquant via un passage de décharge (100) avec le récipient fermé (130) ;
un capuchon (70) disposé sur la partie supérieure de ce corps de valve (80) ;
- un corps de clapet (82) disposé dans ce corps de valve, relié à ce capuchon (70) par un diaphragme (84), qui obture une chambre entre le capuchon et le corps de clapet (82), et un organe élastique (86) placé entre le capuchon et le corps de clapet, l'intérieur de ladite chambre du corps de clapet communiquant via un passage à pression négative (90) avec le tube d'introduction de carburant (120) ; et
- des moyens disposés en dessous d'un passage inférieur (24) dudit tube de guidage pour empêcher le carburant liquide d'être déchargé dans le récipient fermé (130) ;
dans laquelle
- un passage supérieur (88) du tube de guidage (20) qui est relié à une ouverture inférieure dudit corps de valve (80), sert de siège de clapet pour le corps de clapet (82) ; et
- le passage supérieur (88) est ouvert et fermé par ledit corps de clapet (82).

2. La valve de ventilation selon la revendication 1, caractérisée en ce que lesdits moyens pour empêcher le carburant liquide d'être déchargé dans le récipient fermé (130) comprennent :
- un organe de base (21) fixé dans la position la plus inférieure du tube de guidage (20) avec une pluralité de trous traversants (21a) formés dans cet organe ;
- une bride de guidage (40) disposée sur ledit organe de base (21) de telle façon que la bride de guidage (40) puisse coulisser vers le haut et le bas à l'intérieur dudit tube de guidage (20) ;
- une bille en acier (30) reçue entre ledit organe de base (21) et ladite bride de guidage (40) de façon à agir par gravité envers ladite bride de guidage (40) lorsque le véhicule est retourné ;
- un flotteur (50) disposé sur ladite bride de guidage (40) et supporté par un organe élastique (60) pour le flotteur (50) de façon à se déplacer vers le haut et vers le bas à l'intérieur dudit tube de guidage (20) par l'effet de la flottabilité et de la force élastique dudit organe élastique (60) pour le flotteur (50) ;
- un passage inférieur (24) défini dans une partie intermédiaire du tube de guidage (20), et ouvert et fermé par ledit flotteur (50).

3. La valve de ventilation selon la revendication 2, caractérisée en ce que ladite bride de guidage (40) comporte :
- un corps cylindrique (42) qui présente une hauteur et un diamètre extérieur prédéterminés de façon à faciliter le déplacement stable vers le haut et vers le bas de la bride de guidage (40), et
- un bossage (44) formé sur ledit corps cylindrique (42) et qui présente un diamètre inférieur à celui de la bille en acier (30).

4. La valve de ventilation selon la revendication 1, caractérisée en ce que lesdits moyens pour empêcher le carburant liquide d'être déchargé dans le récipient fermé (130) comportent :
- un organe de base (21) fixé à la position la plus inférieure du tube de guidage (20), avec une pluralité de trous traversants (21a) formés à l'intérieur ;
- un flotteur (50) inséré dans une partie inférieure du tube de guidage (20) et supporté par un organe élastique (60) pour le flotteur (50), de façon à se déplacer vers le haut et vers le bas sous l'effet de la flottabilité et de la force élastique de l'organe élastique (60) pour le flotteur (50) ;
- une bride de guidage (40) disposée de façon coulissante entre ledit organe de base (21) et ledit flotteur (50) de façon à déplacer ledit flotteur (50) vers le bas lorsque le véhicule est retourné ; et
- un passage inférieur (24) défini dans une partie intermédiaire du tube de guidage (20), et ouvert et fermé par ledit flotteur (50).

5. La valve de ventilation selon la revendication 4, caractérisée en ce que ladite bride de guidage (40) comporte :
- un corps cylindrique (42) qui présente une hauteur et un diamètre extérieur prédéterminés de façon à faciliter le déplacement stable vers le haut et vers le bas de la bride de guidage (40), et
- un bossage (44) formé sur ledit corps cylindrique (42) et qui présente un diamètre inférieur au diamètre dudit corps cylindrique (42).

6. La valve de ventilation selon la revendication 2 ou 4, caractérisée en ce que ledit passage inférieur (24) est formé de telle façon que son diamètre intérieur soit plus petit dans sa partie supérieure et plus grand dans sa partie inférieure.
